# EUROPÄISCHE PATENTSCHRIFT

(11) **EP 0 942 190 B1**
(45) Veröffentlichungstag und Bekanntmachung des Hinweises auf die Patenterteilung: **31.05.2006**
(21) Anmeldenummer: 99104690.5
(22) Anmeldetag: 10.03.1999
(51) Int. Cl.: F16D 23/12, F16D 25/12

(54) **Ausrückevorrichtung, insbesondere für eine Kupplung**
Actuating device, in particular for a clutch
Dispositif de manoeuvre, en particulier pour un embrayage

(30) Priorität: 13.03.1998 DE 19810955; 22.04.1998 DE 19817904; 25.06.1998 DE 19828198
(43) Veröffentlichungstag der Anmeldung: 15.09.1999
(73) Patentinhaber: Rohs-Voigt Patentverwertungsgesellschaft mbH, 52351 Düren (DE)
(72) Erfinder: Rohs, Ulrich Dr.-Ing., 52351 Düren (DE); Rohs, Hans cand.-Ing., 52351 Düren (DE); Heidingsfeld, Dietmar Dipl.-Ing, 52078 Aachen (DE)
(74) Vertreter: Castell, Klaus

(56) Entgegenhaltungen:
- EP-A- 0 881 134
- DE-A- 3 327 057
- DE-A- 3 806 642
- US-A- 4 532 462

## Beschreibung

Vorliegende Erfindung betrifft eine Ausrückevorrichtung, insbesondere für eine Kupplung.

Eine derartige, gattungsgemäße Ausrückevorrichtung ist z. B. aus der DE 38 06 642 A1 bekannt. Diese Ausrückevorrichtung weist einen Energiespeicher, der beim Ausrücken Energie abgibt und bei einem gegenläufigen Vorgang Energie speichert, auf. Als Energiespeicher dienen hierbei zwei senkrecht zu einem Ausrückekolben angeordnete Federn, die mit einem als Kraftkoppler dienenden Wälzlager, welches entlang einer im wesentlichen konischen Kurvenbahn an dem Ausrückekolben geführt ist, mit dem Ausrückekolben wechselwirken. In Abhängigkeit vom Verschleiß kann eine Baugruppe, die die Kurvenbahn trägt, entlang dem Ausrückekolben verschoben werden, wodurch einem Kupplungsverschleiß selbständig Rechnung getragen werden kann. Das Verschieben dieser Baugruppe erfolgt hierbei proportional zum Weg des Ausrückekolbens.

Es ist Aufgabe vorliegender Erfindung, eine Ausrückevorrichtung, insbesondere für eine Kupplung, bereitzustellen, welche sehr kompakt baut und gleichwohl die Einstellung günstiger Kraftverhältnisse ermöglicht.

Als Lösung schlägt die Erfindung eine Ausrückevorrichtung, gemäß Anspruch 1 vor.

Eine besonders einfache und zudem auch von der Kräfteverteilung günstige Ausrückevorrichtung folgt, wenn der Energiespeicher, der in eine Vorzugsrichtung mit einer Kraft zu beaufschlagen ist, und ein im wesentlichen entlang einer Richtung beweglicher Antrieb derart angeordnet sind, daß diese beiden Richtungen im wesentlichen parallel zueinander ausgerichtet sind. Eine derartig kompakte Anordnung ermöglicht besonders kurze Wegstrecken, zum einen für die Energieerhöhungsmittel, zum anderen aber auch für eine eventuell notwendige Kraftumlenkung. Derartig kurze Wegstrecken bedingen einerseits ein geringes Bauvolumen und ermöglichen andererseits eine günstige Umsetzung der in der Ausrückevorrichtung auftretenden Kräfte.

Vorteilhafterweise erfolgt die Energieerhöhung proportional zu der in der Ausrückevorrichtung auftretenden Kraft. Dieses bedeutet, daß bei einer höheren Kraft dem Energiespeicher mehr Energie zugeführt wird. Vorteilhafterweise ist die Anordnung derart aufgebaut, daß dem Energiespeicher Energie zugeführt wird, wenn die in der Ausrückevorrichtung auftretende Kraft bzw. ein hierzu proportionaler Druck, einen entsprechenden durch den Energiespeicher aufgebrachten Wert übersteigt.

Eine einfache Realisierung einer derartigen Anordnung kann dadurch erfolgen, daß die Mittel zur Energieerhöhung eine mit einem Rückschlagventil versehene hydraulische Anordnung umfassen. Diese hydraulische Anordnung kann über einen entsprechenden Kolben Energie in den Energiespeicher einbringen, während das Rückschlagventil einen Rückfluß der Energie verhindert, wenn die in der Ausrückevorrichtung auftretende Kraft reduziert wird.

Eine besonders unkomplizierte Anordnung folgt, wenn die Ausrückevorrichtung selbst eine Hydraulik umfaßt und die hydraulische Anordnung, die der Energieerhöhung dient, durch diese Hydraulik der Ausrückevorrichtung angetrieben ist.

Wird die erfindungsgemäße Ausrückevorrichtung im Zusammenhang mit einer Kupplung verwendet, bei welcher aufgrund von Verschleiß die für die Ausrückung erforderlichen Kräfte ansteigen, was zu einem proportionalen Anstieg des Betriebsdruckes führt, ermöglicht die erfindungsgemäße Anordnung aufgrund ihrer Mittel zur Erhöhung der Energie im Energiespeicher in Abhängigkeit von einer in der Ausrückevorrichtung auftretenden Kraft einen entsprechenden Energieanstieg in dem Energiespeicher. Dieses bedeutet, daß die durch den Energiespeicher bedingte Kraftentlastung über die Lebensdauer der Kupplung mit einem konstanten Faktor erfolgt.

Falls gewünscht, kann dieser Faktor veränderlich ausgestaltet werden. Dieses kann z. B. derart geschehen, daß die Kraftentlastung bei zunehmendem Kupplungsverschleiß ebenfalls zunimmt, so daß dem entsprechenden proportionalen Anstieg des Betriebsdruckes entgegengewirkt werden kann und die zur Betätigung der Kupplung nötige Kraft über die Lebensdauer nahezu konstant bleibt. Eine derartige Funktion umsetzende Mittel können z. B. Kompensationsfedern sein. Beispielsweise können als Kompensationsfedern unmittelbar Tellerfedern Verwendung finden, die bei geringer Auslenkung eine größere Kraft ausüben als bei größerer Auslenkung. Werden derartige Tellerfedern unmittelbar der in der Ausrückevorrichtung auftretenden Kraft entgegengesetzt, wirken diese im Neuzustand der Kupplung mit einer großen Kraft und bei verschlissener Kupplung mit einer geringeren Kraft dem Systemdruck entgegen.

Bei einer Ausrückevorrichtung, bei welcher der Energiespeicher mittels eines entlang einer Kurvenbahn geführten Kraftkopplers, vorzugsweise eines entlang der Kurvenbahn wälzenden Wälzlagers, an die übrige Ausrückevorrichtung gekoppelt ist, können vorteilhafterweise zwischen dem Energiespeicher und dem Kraftkoppler Mittel zur Kraftumlenkung vorgesehen sein. Auf diese Weise kann der Energiespeicher möglichst raumsparend, beispielsweise parallel zu einem Ausrückekolben angeordnet werden.

Derartige Kraftumlenkungsmittel können z. B. gegenläufige Führungskurven sein, durch welche eine Baugruppe, wie beispielsweise eine Walze, in gewünschte Richtung mit einer Kraft beaufschlagt wird.

Es versteht sich, daß das Vorsehen einer derartigen Kraftumlenkung, die es ermöglicht, den Energiespeicher räumlich in gewissen Grenzen unabhängig von der Richtung, in welcher die Kraft letztlich auf die Ausrückevorrichtung übertragen wird, unabhängig von der übrigen Merkmalen der Ausrückevorrichtung vorteilhaft Anwendung finden kann.

Ist die in eine Vorzugsrichtung mit einer Kraft zu beaufschlagende Baugruppe eine Feder, kann diese Feder um den Antrieb herum angeordnet werden. Dieses ermöglicht die Verwendung einer verhältnismäßig großen Feder mit den einer großen Feder entsprechenden vorteilhaften Eigenschaften zur Energiespeicherung.

Es versteht sich, daß eine derartige Anordnung zwischen der in eine Vorzugsrichtung mit einer Kraft zu beaufschlagende Baugruppe und dem Antrieb auch für sich genommen vorteilhaft für eine Ausrückevorrichtung Verwendung finden kann.

Hierbei können die Richtungen durch jede beliebige Koordinate in beliebigen Koordinatensystemen definiert werden. Insbesondere können diese Richtungen in Zylinderkoordinaten oder kartesischen Koordinaten parallel gewählt werden, was bedeutet, daß die Richtungen insbesondere radial, axial oder linear gewählt werden können.

Die vorgenannten, erfindungsgemäßen Merkmale der Ausrückevorrichtung eignen sich insbesondere für eine Ausrückevorrichtung, die einen im wesentlichen linear angetriebenen Ausrückekolben bzw. einen ähnlichen Antrieb umfaßt. Andererseits können die erfindungsgemäßen Merkmale bei jeder Art Ausrückevorrichtung vorteilhaft Anwendung finden. Insofern umfaßt vorliegend der Begriff Ausrückevorrichtung jede an einem Ausrückevorgang statisch oder beweglich beteiligte Baugruppe, und zwar einzeln oder in Zusammenschau mit weiteren Baugruppen, die ebenfalls an dem Ausrückevorgang beteiligt sein können.

Besonders vorteilhaft ist es, wenn die Ausrückevorrichtung lediglich mittelbar über ein Koppelglied, wie eine Hydraulikverbindung, mit der auszurückenden Baugruppe verbunden ist. Das Koppelglied gewährleistet eine gewisse Unabhängigkeit von der auszurückenden Baugruppe, wie z. B. einer Druckplatte einer Kupplung bzw. einer diese Druckplatte andrückenden Tellerfeder und deren Betätigungszungen.

Insbesondere kann die Ausrückevorrichtung unmittelbar an einem Kupplungs- bzw. Betätigungspedal oder - hebel angeordnet sein. Das Koppelglied schafft dann die entsprechende Kraftverbindung von der Ausrückevorrichtung zu der auszurückenden Baugruppe, wie z. B. der Kupplung selbst.

Durch die bauliche Trennung zwischen Ausrückevorrichtung und auszurückender Baugruppe, wie der Kupplung, können die Kräfteverhältnisse an der Ausrückevorrichtung größtenteils unabhängig von den an der Kupplung bzw. der auszurückenden Baugruppe auftretenden Kräfteverhältnissen gewählt werden. Insofern kann der Energiespeicher unabhängig von anderen, möglicherweise ergänzenden Maßnahmen an der Kupplung selbst zur Erleichterung der zu leistenden Ausrückearbeit genutzt werden.

Die Ausrückevorrichtung läßt sich baulich einfach kompakt ausgestalten, wenn sie mindestens eine Walze umfaßt, die mittels einer Führungsfläche und einer mit dem Energiespeicher wirkverbundenen Schräge geführt ist und mit einer Kontur des Antriebs wechselwirkt.

Vorteilhafterweise werden die Schräge und die Kontur im wesentlichen gegensinnig aneinander vorbei geführt. Auf diese Weise läßt sich eine koaxiale Ausrichtung des Ausrückeantriebs und des Energiespeichers in einfacher Weise realisieren. Bei einer derartigen Anordnung sind vorzugsweise die Radien der mit der Kontur in Kontakt kommenden Bereiche und der mit der Schräge in Kontakt kommenden Bereiche der Walze derart gewählt, daß die Walze auf beiden Flächen mit etwa der gleichen Geschwindigkeit abrollen kann. Auf diese Weise wird eine nahezu schlupffreie Kraftumlenkung gewährleistet. Insbesondere wenn die Schräge und die Kontur ihren Winkel zueinander während des Ausrückevorgangs ändern, kann es von Vorteil sein, wenn die Walze zumindest zwei zueinander drehbar gelagerte Baugruppen aufweist, von denen eine an der Schräge und die andere an der Kontur anliegt. Auf diese Weise wird ein eventuell vorhandener Schlupf auf die Walze selber übertragen. Diesem kann dort mit kleineren Radien und somit geringeren Kräften begegnet werden.

Zur Verminderung der Reibung an der Führungsfläche kann die Walze zumindest einen drehbar an der Walze gelagerten Führungskörper aufweisen, der an der Führungsfläche geführt wird. Auf diese Weise wird eine an dieser Stelle auftretende Reibung vorteilhaft reduziert.

Ein einfacher und kostengünstiger Aufbau der Ausrückevorrichtung folgt, wenn der Energiespeicher einen mechanischen Energiespeicher, wie eine Feder, umfaßt.

Insbesondere kann der Energiespeicher eine axial zu einem Antrieb der Ausrückevorrichtung angeordnete Feder umfassen. Ist diese Feder koaxial zu dem Antrieb angeordnet, folgt eine besonders kompakte Ausgestaltung der Ausrückevorrichtung.

In vorliegendem Zusammenhang kann der Antrieb ein jedes Schub- oder Hubgestänge darstellen, welches zumindest mit einer Komponente entlang seiner Längserstreckungsrichtung bewegt wird.

Weitere Vorteile, Ziele und Eigenschaften einer erfindungsgemäßen Ausrückevorrichtung werden nachfolgend anhand der Beschreibung anliegender Zeichnung erläutert, in welcher beispielhaft zwei Ausführungsformen erfindungsgemäßer Ausrückevorrichtungen dargestellt sind.

In der Zeichnung zeigen:
- Figur 1: eine erste Ausrückevorrichtung im Schnitt entlang der Linie B - B in Figur 2,
- Figur 2: die Ausrückevorrichtung nach Figur 1 im Schnitt entlang der Linie A - A in Figur 1,
- Figur 3: eine schematische Darstellung einer zweiten Ausführungsform in ähnlicher Ansicht wie Figur 1,
- Figur 4: die Wirkung der Ausrückevorrichtung nach Figur 3 im Neuzustand wie auch nach Verschleiß und
- Figur 5: einen Vergleich der Pedalkräfte bei einer konventionellen Ausrückevorrichtung mit den Pedalkräften bei einer erfindungsgemäßen Ausrückevorrichtung.

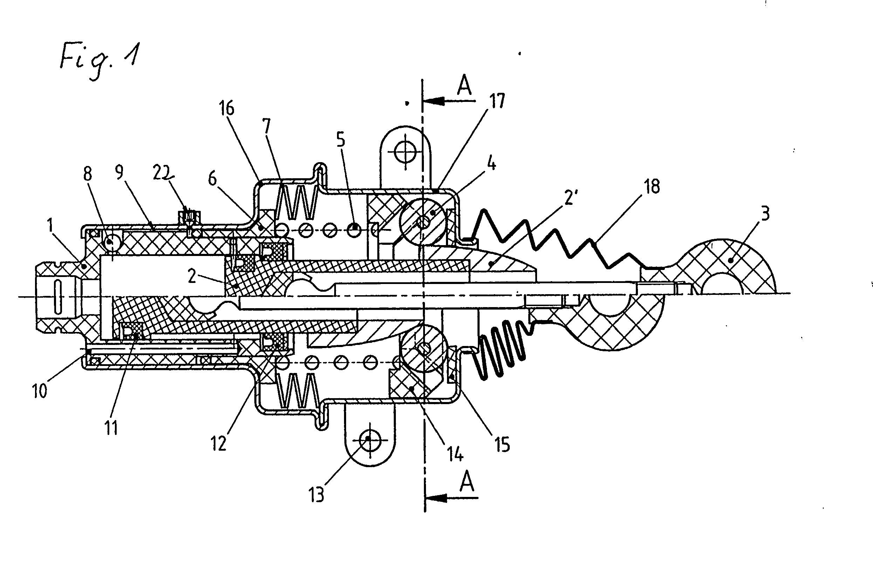

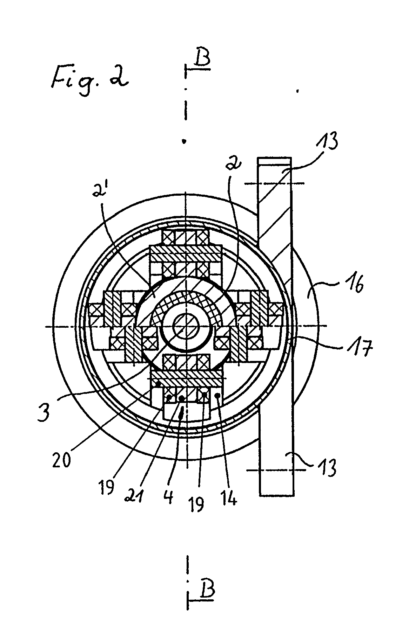

Die Ausrückevorrichtung nach Figuren 1 und 2 umfaßt einen Kupplungsgeber-Zylinder 1 einer hydraulischen Kupplungsbetätigung, in welchem ein Kolben 2 einen Ausrückedruck aufbauen kann. Der Kolben 2 wird durch eine Kupplungspedalstange 3 betätigt, die mit einem entsprechenden Kupplungspedal wirkverbunden ist. Der Zylinder 1 ist durch Dichtungen 11 und 12 abgedichtet und von einem Gehäuseteil 16 umgeben. Die Ausrückevorrichtung weist einen weiteren Gehäuseteil 17 auf, welcher mit dem Gehäuseteil 16 durch eine Bördelverbindung verbunden ist. Durch einen Faltenbalg 18, welcher zwischen dem Gehäuseteil 17 und der Kupplungspedalstange 3 angeordnet ist, wird das Gehäuse 16; 17 zur Gänze verschlossen.

Der Kolben 2 weist an seinem pedalseitigen Ende eine Kontur 2' auf. Auf dieser Kontur 2' laufen Walzen 4, die durch Federn 5 vorgespannt sind. Zwischen den Federn 5 und den Walzen 4, welche als Kraftkoppler dienen, sind Mittel zur Kraftumlenkung vorgesehen. Diese umfassen einen Kraftumlenkungsring 14 mit einer Schräge sowie eine Scheibe 15 mit einer Führungsfläche. Durch die Federn 5, die Schräge sowie die Führungsfläche sind die Walzen 4 derart vorgespannt, daß sie nach radial innen auf die Kontur 2' eine Kraft ausüben. Wird das Kupplungspedal getreten, so können sich die Walzen 4 in Richtung auf die Kupplungspedalstange 3 verlagern. Hierdurch bewegt sich der Kraftumlenkungsring 14 entgegen der Betätigungsrichtung der Kupplungspedalstange 3. Bei diesem Vorgang entspannen sich die Federn 5 und geben eine entsprechende Arbeit an den Kolben 2 ab. Wird die Kupplung wieder eingerückt, schiebt eine Tellerfeder der Kupplung, oder etwas ähnliches, den Kolben 2 in seine Ausgangslage zurück, und die Feder 5 wird wieder gespannt.

Durch die. Gestaltung der Kolbenkontur 2' kann die gewünschte Verstärkung über den Pedalweg beliebig gestaltet werden.

Wie unmittelbar ersichtlich, sind die Schräge und die Kontur 2' im wesentlichen gegensinnig zueinander geführt.

Die Walzen 4 umfassen, wie insbesondere in Figur 2 dargestellt, Rollen 21, die auf einer Achse 20 geführt sind. Hierbei stehen die Rollen 21 mit der Kontur 2' und die Achsen 20 mit der Schräge des Kraftumlenkungsringes 14 in Kontakt. Die Radien von den Rollen 21 und den Achsen 20 sind entsprechend einem Neigungswinkel von 45° der Schräge in einem Verhältnis von 1 : √2 gewählt, so daß eine annähernd schlupffreie Bewegung der Walzen 4 gewährleistet werden kann, selbst wenn die Achsen 20 und die Rollen 21 fest miteinander verbunden sind. Wegen des nichtlinearen Verlaufs der Kontur 2' ist eine vollständige Schlupfvermeidung nicht möglich. Zur Verminderung von Reibungsverlusten sind aus diesem Grunde die Achse 20 und die Rolle 21 nicht einstückig ausgeführt und zueinander drehbeweglich.

Zur Vermeidung unnötiger Reibungsverluste an der Führungsfläche der Scheibe 15 sind auf der Achse 20 zwei Kunststoffscheiben 19, jeweils beidseits jeder Rolle 21, gelagert. Der Durchmesser dieser Kunststoffscheiben 19 ist ein wenig größer gewählt als der Durchmesser der Rollen 21. Auf diese Weise stützen sich die Kunststoffscheiben 19 an der Führungsfläche der Scheibe 15 ab, während jede der Rollen 21 durch die Scheibe 15 nicht behindert wird. Andererseits ist der Durchmesser der Kunststoffscheiben so klein gewählt, daß diese in ihrer Rotation nicht durch die Kontur 2' behindert werden. Eine derartige Ausformung ist, wie in Figur 2 ersichtlich, wegen des kreisförmigen Querschnitts der Kontur 2' möglich.

Um die Ausrückevorrichtung an Unterschiede zwischen einer neuen und einer verschlissenen Kupplung anzupassen, stützt sich die Feder 5 auf einen Kolben 6 ab, der seinerseits mit einem Systemdruck der hydraulischen Kupplungsbetätigung aus dem Zylinder 1 beaufschlagt wird. Hierzu wird der Druck im Zylinder 1 abgenommen und über ein Rückschlagventil 8 und einer kalibrierte Drossel 9 dem Kolben 6 zugeführt.

Wenn die Kupplung verschleißt, steigen die für die Ausrückung erforderlichen Kräfte an, was zu einem proportionalen Anstieg des Betriebsdruckes führt. Da dieser Druck auf den Kolben 6 gegeben wird, steigt die Verspannung der Feder 5 proportional zum Systemdruck und damit zur Ausrückkraft an. Dieses bedeutet, daß die Kraftentlastung des Kupplungspedals über die Lebensdauer der Kupplung mit einem konstanten Faktor erfolgt. Da in dem System nur geringe Kräfte wirken, kann dieser Faktor hoch sein. Es muß lediglich sichergestellt werden, daß unter Berücksichtigung der Hysterese die Pedalkraft nie negativ wird und daß die gewünschte Kupplungscharakteristik erhalten bleibt.

Durch Tellerfedern 7, die als Kompensationsfedern dienen und an dem Kolben 6 dem Systemdruck entgegenwirken, wird darüber hinaus erreicht, daß der Faktor der Kraftentlastung bei zunehmendem Kupplungsverschleiß ebenfalls zunimmt, so daß die Pedalkraft über der Lebensdauer nahezu konstant bleibt, da auf diese Weise dem durch Verschleiß erhöhten Systemdruck entgegengewirkt wird.

Die Verwendung von Tellerfedern hat hierbei den unmittelbaren Vorteil, daß diese so ausgelegt werden können, daß sie bei geringer Auslenkung eine größere Kraft ausüben als bei größerer Auslenkung und somit im Neuzustand der Kupplung dem hydraulischen Druck eine große Kraft entgegengesetzt wird, während bei verschlissener Kupplung dem Systemdruck eine geringere Kraft entgegengesetzt wird.

Das Rückschlagventil 8 bewirkt, daß der Druck auf den Kolben 6 und damit die Vorspannung der Feder 5 auf ihrem Maximalwert erhalten bleibt. Die Drossel andererseits ermöglicht ein Auskuppeln auch dann, wenn nach längerer Standzeit der Druck über dem Kolben 6 verloren gegangen ist. Nach wenigen Kuppelvorgängen ist der notwenige Druck wieder aufgebaut.

Die Ausrückevorrichtung weist des weiteren eine Entlüftung 22 auf, die beim Austausch der Kupplung oder Wechseln der Kupplungsbeläge eine Entlastung des hydraulischen Systems ermöglicht.

Der Kolben 6 deckt des weiteren eine Schnüffelbohrung ab, die mit einer Entlüftung 10 des hydraulischen Systems verbunden ist. Auf diese Weise ist gewährleistet, daß der Kolben 6 nicht über diese Schnüffelbohrung hinaus verschoben werden kann.

Die durch den Zylinder 1 angetriebene Hydraulik ermöglicht als Koppelglied des weiteren eine vorteilhafte bauliche Unabhängigkeit der Ausrückevorrichtung zu der Kupplung selbst.

Das Gehäuse 16, 17 ist des weiteren mit Laschen 13 versehen, die der Befestigung der Ausrückevorrichtung dienen.

Der Innendurchmesser der Scheibe 15 ist derart eng gewählt, daß die Kontur 2' die Scheibe 15 nicht durchdringen kann. Dieses dient als Montagehilfe beim Zusammenbau dieser Ausrückevorrichtung.

Es versteht sich, daß statt der hydraulischen Mittel zur Energieerhöhung auch entsprechende, mechanische Einrichtungen Verwendung finden können.

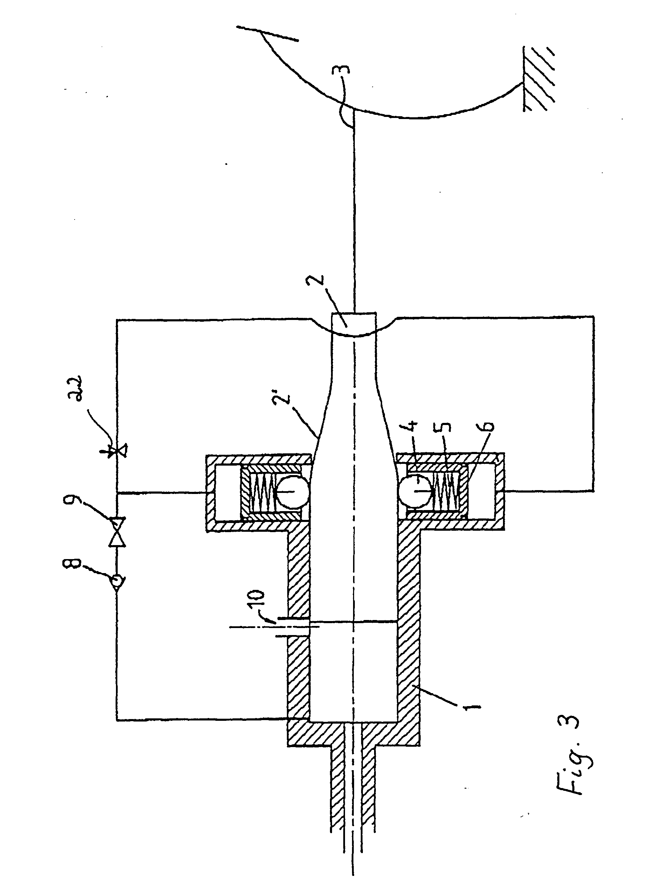

Das in den Figuren 3 bis 5 dargestellte Ausführungsbeispiel baut nicht ganz so kompakt wie das zuvor beschriebene Ausführungsbeispiel. Im wesentlichen ist es jedoch gleich dem zuvor beschriebenen Ausführungsbeispiel aufgebaut. Identische Baugruppen sind in beiden Ausführungsbeispielen gleich beziffert.

Die zweite Ausrückevorrichtung weist zwei beidseits des Kolbens 2 angeordnete Federn 5 auf. Diese sind im vorliegenden Ausführungsbeispiel senkrecht zum Kolben 2 und somit senkrecht zum Antrieb der Ausrückevorrichtung mit einer Kraft zu beaufschlagen. Es versteht sich, daß mit einer anhand des ersten Ausführungsbeispiels dargestellten Walzenführung oder ähnlichem ohne weiteres diese Vorzugsrichtung in gewünschter Weise geändert werden kann. Ebenso werden die hydraulischen Leitungen für die Mittel zur Energieerhöhung innerhalb des Gehäuses angeordnet, so daß auch diese Ausrückevorrichtung im Vergleich zu bekannten Ausrückevorrichtungen kompakt baut.

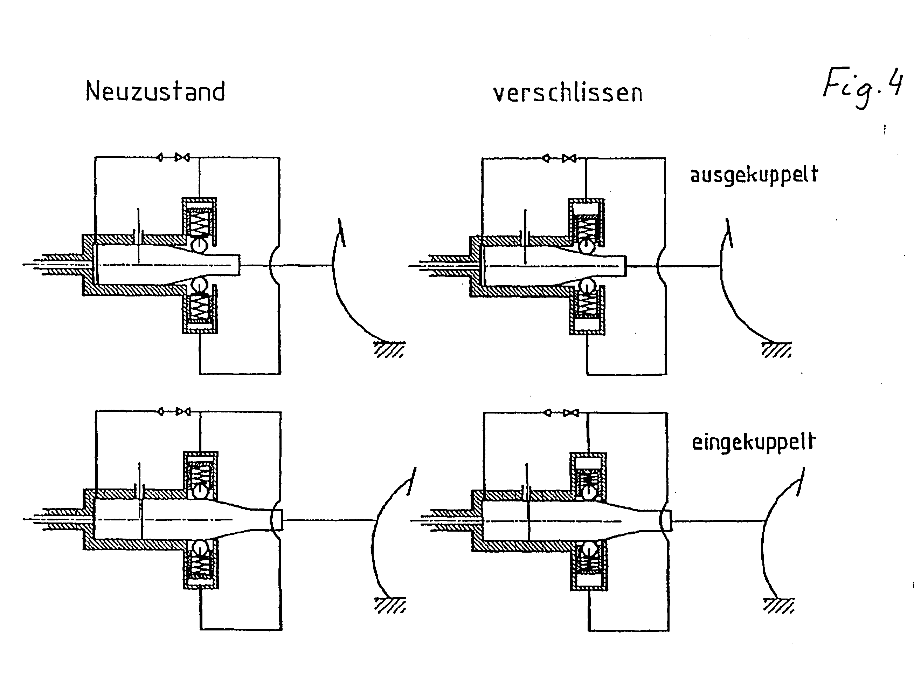

Wie aus Figur 4 ersichtlich, werden die Federn 5 im verschlissenen Zustand durch den erhöhten Systemdruck komprimiert, so daß in den Federn 5, also dem Energiespeicher, eine höhere Energie gespeichert wird, die zur Erleichterung der Ausrückearbeit genutzt werden kann.

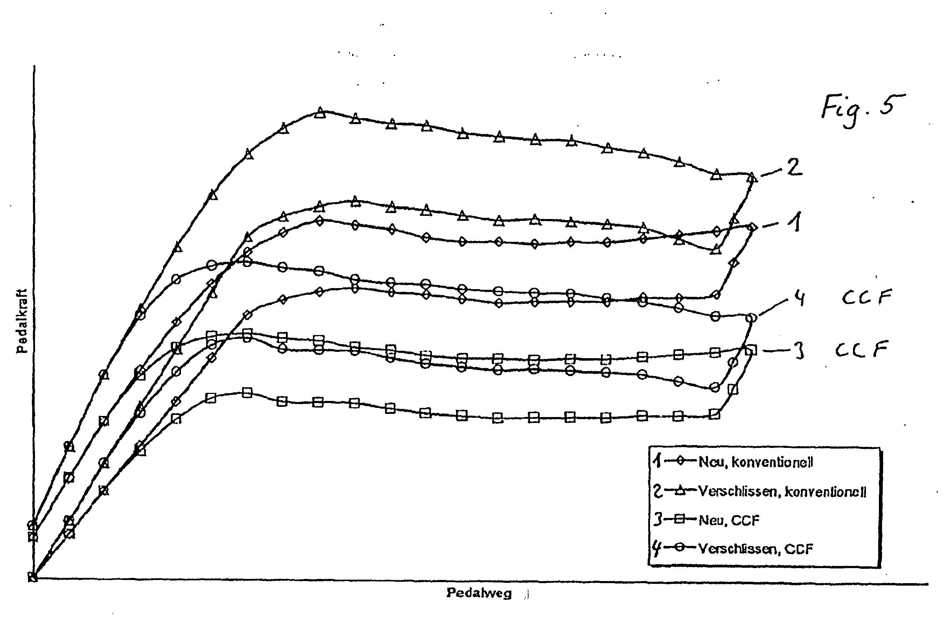

Die resultierende Verbesserung der Pedalkraftverhältnisse ist in Figur 5 dargestellt.

## Patentansprüche

1. Ausrückevorrichtung, insbesondere für eine Kupplung, mit einem Energiespeicher (5), der beim Ausrücken Energie abgibt und bei einem gegenläufigen Vorgang Energie speichert sowie in einer Vorzugsrichtung mit einer Kraft zu beaufschlagen ist, und mit einem im Wesentlichen entlang einer Richtung beweglichen Antrieb, ***dadurch gekennzeichnet, dass*** der Energiespeicher und der Antrieb derart angeordnet sind, dass beide Richtungen im Wesentlichen parallel zueinander ausgerichtet sind.

2. Ausrückvorrichtung nach Anspruch 1, ***gekennzeichnet durch*** einen entlang einer Kurvenbahn (2') geführten Kraftkoppler (4), wobei zwischen dem Energiespeicher (5) und dem Kraftkoppler (4) Mittel (14, 15) zur Kraftumlenkung vorgesehen sind.

3. Ausrückevorrichtung nach Anspruch 2, ***dadurch gekennzeichnet, dass*** der Kraftkoppler (4) ein entlang der Kurvenbahn (2') walzendes Walzlager aufweist.

4. Ausrückevorrichtung nach einem der Ansprüche 1 bis 3, ***gekennzeichnet durch*** Mittel (6, 8, 9) zur Erhöhung der Energie im Energiespeicher (5) in Abhängigkeit von einer in der Ausrückvorrichtung auftretenden Kraft.

5. Ausrückevorrichtung nach Anspruch 4, ***dadurch gekennzeichnet, dass*** die Energieerhöhung proportional zu der in der Ausrückevorrichtung auftretenden Kraft erfolgt.

6. Ausrückevorrichtung nach Anspruch 4 oder 5, ***dadurch gekennzeichnet, dass*** die Mittel (6, 8, 9) zur Energieerhöhung eine mit einem Rückschlagventil (8) versehene hydraulische Anordnung (8, 9) umfassen.

7. Ausrückevorrichtung nach Anspruch 6, ***dadurch gekennzeichnet, dass*** die hydraulische Anordnung (8, 9) durch eine Hydraulik (1) der Ausrückevorrichtung angetrieben ist.

8. Ausrückvorrichtung nach einem der Ansprüche 1 bis 7, ***dadurch gekennzeichnet, dass*** die Mittel (6, 8, 9) zur Energieerhöhung wenigstens eine Kompensationsfeder (7) umfassen.

9. Ausrückevorrichtung nach einem der Ansprüche 1 bis 8, ***dadurch gekennzeichnet, dass*** die Ausrückevorrichtung einen im Wesentlichen linear angetriebenen Ausrückekolben (2) umfasst.

10. Ausrückevorrichtung nach einem der Ansprüche 1 bis 9, ***dadurch gekennzeichnet, dass*** die Ausrückevorrichtung mittelbar über ein Koppelglied, wie eine Hydraulikverbindung, mit einer auszurückenden Baugruppe verbunden ist.

11. Ausrückevorrichtung nach einem der Ansprüche 1 bis 10, ***gekennzeichnet durch*** mindestens eine Walze (4), die mittels einer Führungsfläche und einer mit dem Energiespeicher (5) wirkverbundenen Schräge geführt ist und die mit einer Kontur (2') eines Ausrückeantriebs (2, 3) wechselwirkt.

12. Ausrückevorrichtung nach Anspruch 11, ***dadurch gekennzeichnet, dass*** die Schräge und die Kontur (2') im Wesentlichen gegensinnig zueinander geführt sind.

13. Ausrückevorrichtung nach Anspruch 11 oder 12, ***dadurch gekennzeichnet, dass*** die Walze (4) zumindest zwei zueinander drehbar gelagerte Baugruppen (20, 21) aufweist, von denen eine an der Schräge und die andere an der Kontur (2') anliegt.

14. Ausrückevorrichtung nach einem der Ansprüche 11 bis 13, ***dadurch gekennzeichnet, dass*** die Walze (4) zumindest einen drehbar gelagerten Führungskörper (19) aufweist, der mit der Führungsfläche (15) wechselwirkt.

## Claims

1. A disengaging device, more specifically for a clutch, with an energy storage device (5) that releases energy during disengaging and stores energy during an opposite process and that must be submitted to a force in a preferred direction, and with a drive which is movable substantially along one direction, ***characterized in that*** the energy storage device and the drive are disposed in such a manner that both directions are oriented substantially parallel to each other.

2. The disengaging device according to claim 1, ***characterized by*** a force coupler (4) guided along a curved path (2'), means (14, 15) for diverting a force being provided between the energy storage device (5) and the force coupler (4).

3. The disengaging device according to claim 2, ***characterized in that*** the force coupler (4) comprises a rolling bearing rolling along the curved path (2').

4. The disengaging device according to one of the claims 1 to 3, ***characterized by*** means (6, 8, 9) to increase the energy in the energy storage device (5) depending on a force appearing in the disengaging device.

5. The disengaging device according to claim 4, ***characterized in that*** the energy increase results proportionally to the force appearing in the disengaging device.

6. The disengaging device according to claim 4 or 5, ***characterized in that*** the means (6, 8, 9) to increase the energy include a hydraulic arrangement (8, 9) equipped with a check valve (8).

7. The disengaging device according to claim 6, ***characterized in that*** the hydraulic arrangement (8, 9) is driven by a hydraulic system (1) of the disengaging device.

8. The disengaging device according to one of the claims 1 to 7, ***characterized in that*** the means (6, 8, 9) to increase the energy include at least a compensation spring (7).

9. The disengaging device according to one of the claims 1 to 8, ***characterized in that*** the disengaging device includes a disengaging piston (2).

10. The disengaging device according to one of the claims 1 to 9, ***characterized in that*** the disengaging device is indirectly connected to an assembly that is to be disengaged via a coupling member, as a hydraulic connection.

11. The disengaging device according to one of the claims 1 to 10, ***characterized by*** at least one roll (4) that is guided by means of a guiding surface and an incline work-connected to the energy storage device and that interacts with a contour (2') of a disengaging drive (2, 3).

12. The disengaging device according to claim 11, ***characterized in that*** the incline and the contour (2') are substantially inversely guided.

13. The disengaging device according to claim 11 or 12, ***characterized in that*** the roll (4) comprises at least two assemblies (20, 21) borne rotatable relative to each other, one of which comes to rest against the incline and the other against the contour (2').

14. The disengaging device according to one of the claims 11 to 13, ***characterized in that**,* the roll comprises at least one rotatably borne guiding body (19), that interacts with the guiding surface (15).

## Revendications

1. Dispositif de débrayage, notamment pour un embrayage, avec un accumulateur d'énergie (5) qui libère de l'énergie lors du débrayage, qui accumule de l'énergie lors d'un processus contraire et qui doit être soumis à une force dans une direction préférée, et avec un entraînement mobile sensiblement dans une direction, ***caractérisé en ce que*** l'accumulateur d'énergie et l'eritraînement sont disposé de telle manière que les deux directions sont orientées sensiblement parallèlement l'une par rapport à l'autre.

2. Dispositif de débrayage selon la revendication 1, ***caractérisé par*** un coupleur d'effort (4) guidé le long d'une voie courbe (2'), des moyens (14, 15) pour dévier une force étant prévus entre l'accumulateur d'énergie (5) et le coupleur d'effort (4).

3. Dispositif de débrayage selon la revendication 2, ***caractérisé en ce que*** le coupleur d'effort (4) comporte un palier à roulement roulant le long de la voie courbe (2').

4. Dispositif de débrayage selon l'une quelconque des revendications 1 à 3, ***caractérisé par*** des moyens (6, 8, 9) pour augmenter l'énergie dans l'accumulateur d'énergie (5) en fonction de la force apparaissant dans le dispositif de débrayage.

5. Dispositif de débrayage selon la revendication 4, ***caractérisé en ce que*** l'énergie augmente proportionnellement à la force apparaissant dans le dispositif de débrayage.

6. Dispositif de débrayage selon la revendication 4 ou 5, ***caractérisé en ce que*** le moyens (6, 8, 9) pour augmenter l'énergie comprennent un montage hydraulique (8, 9) équipé d'une soupape de retenue (8).

7. Dispositif de débrayage selon la revendication 6, ***caractérisé en ce que*** le montage hydraulique (8, 9) est entraîné par un groupe hydraulique (1) du dispositif de débrayage.

8. Dispositif de débrayage selon l'une quelconque des revendications 1 à 7, ***caractérisé en ce que*** les moyens (6, 8, 9) pour augmenter l'énergie comprennent au moins un ressort de compensation (7).

9. Dispositif de débrayage selon l'une quelconque des revendications 1 à 8, ***caractérisé en ce que*** le dispositif de débrayage comprend un piston de débrayage à entraînement linéaire.

10. Dispositif de débrayage selon l'une quelconque des revendications 1 à 9, ***caractérisé en ce que* le** dispositif de débrayage est indirectement connecté par l'intermédiaire d'un élément de couplage tel qu'une connexion hydraulique avec un sous-ensemble destiné à être débrayé.

11. Dispositif de débrayage selon l'une quelconque des revendications 1 à 10, ***caractérisé par*** au moins un rouleau (4), qui est guidé au moyen d'une surface de guidage et d'une partie inclinée agissant conjointement avec l'accumulateur d'énergie (5) et qui interagit avec un contour (2') d'un entraînement de débrayage (2, 3).

12. Dispositif de débrayage selon la revendication 11, ***caractérisé en ce que*** la partie inclinée et le contour (2') sont guidés en contresens l'un par rapport à l'autre.

13. Dispositif de débrayage selon la revendication 11 ou 12, ***caractérisé en ce que*** le rouleau (4) comporte ou moins deux sous-ensembles (20, 21) montés mobiles en rotation l'un par rapport à l'autre, l'un d'eux prenant appui sur la partie inclinée et l'autre su le contour (2').

14. Dispositif de débrayage selon l'une quelconque des revendications 11 à 13, ***caractérisé en ce que*** le rouleau (4) comporte au moins un corps de guidage (19) monté mobile en rotation interagissant avec la surface de guidage (15).
